# EUROPÄISCHE PATENTSCHRIFT

(11) **EP 1 838 959 B1**
(45) Veröffentlichungstag und Bekanntmachung des Hinweises auf die Patenterteilung: **25.05.2016**
(21) Anmeldenummer: 05823616.7
(22) Anmeldetag: 19.12.2005
(51) Int. Cl.: F02M 37/22, B01D 36/00

(54) **KRAFTSTOFFFILTER, INSBESONDERE FüR KRAFTFAHRZEUGE**
FUEL FILTER, IN PARTICULAR FOR MOTOR VEHICLES
FILTRE À CARBURANT, EN PARTICULIER POUR DES VÉHICULES À MOTEUR

(30) Priorität: 04.01.2005 DE 102005000658
(43) Veröffentlichungstag der Anmeldung: 03.10.2007
(73) Patentinhaber: ROBERT BOSCH GMBH, 70442 Stuttgart (DE)
(72) Erfinder: BRIELMANN, Volker, E-28220 Madrid (ES); BLASCO REMACHA, Carlos J., E-19200 Azuqueca De Henares (guadalajara (ES); GRANDA, Miguel, E-28022 Madrid (ES); GAENSWEIN, Matthias, 73732 Esslingen (DE); GOMES GAMA, Vasco, E-28032 Madrid (ES)
(86) Internationale Anmeldenummer: PCT/EP2005/056905
(87) Internationale Veröffentlichungsnummer: WO 2006/072545

(56) Entgegenhaltungen:
- WO-A1-2004/065780
- DE-A1- 10 138 695
- US-A- 5 645 718
- US-A- 5 817 234
- US-A- 5 904 844
- US-A1- 2003 228 969
- US-B1- 6 494 326

## Beschreibung

Die Erfindung betrifft einen Kraftstofffilter mit einem Filterelement zum Herausfiltern von Partikeln und Wasser aus einem durch den Kraftstofffilter strömenden Kraftstoff, und einem Entwässerer zum Abführen des herausgefilterten Wassers aus dem Filter.

Kraftstofffilter der oben genannten Art werden bei Kraftfahrzeugen, welche beispielsweise mit einem Dieselmotor angetrieben sind, zum Herausfiltern von in Dieselkraftstoff enthaltenen Partikeln und Wasser verwendet. Die Filtration des Kraftstoffes wird durchgeführt, damit es insbesondere in einem Einspritzsystem der zugehörigen Kraftmaschine nicht zu Störungen oder Schäden, wie beispielsweise Korrosion kommt. Solche Schäden könnten durch Wasser verursacht sein, welches im Kraftstoff verblieben ist.

Aus dem genannten Grund ist auch in der DIN EN 590 ein maximal zulässiger Anteil von Wasser in Dieselkraftstoff von unter 200 mg/l festgeschrieben. Zum Erreichen eines solchen Grenzwertes ist bei herkömmlichen Kraftstofffiltern ein Filterelement vorgesehen, an dem sowohl Partikel zurückgehalten als auch Wasser aus dem strömenden Kraftstoff abgetrennt wird. Das abgetrennte Wasser gelangt zu einem Entwässerer, welcher für den eigentlichen Kraftstoff unpassierbar ist. An dem Entwässerer ist unterhalb des Filterelements oftmals ein Sumpf vorgesehen, in dem sich das aus dem Kraftstoff abgeführte Wasser sammeln kann.

Das im Sumpf gesammelte Wasser muss regelmäßig entleert werden, wofür spezielle Auslass- bzw. Ventilelemente vorzusehen sind.
So ist aus DE 101 38 695 A1 eine Vorrichtung zum Austragen von Wasser aus dem Kraftstoffsystem einer Brennkraftmaschine bekannt, bei der das abgeschiedene Wasser solange in einem Sumpf gesammelt wird, bis ein Wassersensor ein Mindestniveau an Wasser detektiert. Es wird dann ein Absperrorgan geöffnet, durch welches das Wasser abgelassen oder zu einem zweiten Entwässerer gefördert werden kann. Ein Nachteil dieser Lösung besteht darin, dass im Falle einer Fehlfunktion des Wassersensors das Wasser am Entwässerer des Kraftstofffilters niemals entleert wird. Außer dieser Anfälligkeit für Störungen ist die Lösung auch vergleichsweise teuer, da ein Wassersensor, ein Absperrorgan und eine zugehörige Steuerelektronik erforderlich sind.

Aus WO 2004/065780 ist ein Kraftstofffilter bekannt, bei dem unter einem Filterelement ein Entwässerer angeordnet ist. Die Membran des Entwässerers kann entweder eine asynchrone PVA-Composite-Membran sein oder eine Zeolithmembran, die aus einer mit Zeolith-Kristallen gebildeten Schicht aufgebaut ist.

Aus JP 61-216701 ist ebenfalls ein Kraftstofffilter bekannt, bei dem unter einem Filterelement ein Entwässerer angeordnet ist. Die Membran des Entwässerers ist zwischen zwei Gehäuseteilen des Kraftstofffilters eingespannt, so dass eine geschlossene bauliche Einheit gestaltet ist. Dabei befindet sich der Entwässerer an der Reinseite des Filterelements.
Aus JP 64-11609 ist eine automatische Wasserabscheideeinrichtung für eine Kraftstoffversorgungsanlage bekannt, bei der ein unter einem Filterelement angeordneter Entwässerer mit einer ersten hydrophilen Membran und einer in Strömungsrichtung des abgeschiedenen Wassers nachgeordneten hydrophoben Membran gestaltet ist.
Der Erfindung liegt die Aufgabe zugrunde einen Kraftstofffilter mit einem Filterelement und einem Entwässerer der eingangs genannten Art bereitzustellen, wobei für den Kraftstofffilter im Falle einesUnfalls das Risiko einer Kontamination der Umwelt durch austretenden Kraftstoff reduziert ist.

Die Aufgabe ist gemäß der Erfindung mit einem Kraftstofffilter gemäß dem Anspruch 1 gelöst. Der Entwässerer kann als eine Baueinheit gestaltet sein, welche wahlweise von dem Filterelement getrennt werden kann. Mit anderen Worten ist der Entwässerer nicht in das Gehäuse des Filterelements bzw. des gesamten Kraftstofffilters integriert, sondern er ist als eigenständiges Modul, beispielsweise in Gestalt eines Wechseleinsatzes ausgeführt, der bei Bedarf austauschbar ist. So kann der erfindungsgemäße Entwässerer beispielsweise in frei wählbaren Wechselintervallen vom Filterelement getrennt und falls erforderlich gereinigt werden. Im Schadensfall ist der Entwässerer leicht austauschbar, während das Filterelement des Kraftstofffilters weiter verwendet werden kann. Bei entsprechender Gestaltung des Moduls Entwässerer, kann durch das Abnehmen des Wechseleinsatzes am Kraftstofffilter ein Zugang zum Filterelement derart geschaffen werden, dass auch das Filterelement, falls gewünscht, gewechselt werden kann. Darüber hinaus kann auch das Filterelement ein eigenständiges Modul bilden, das seinerseits an einem Anschlussmodul angekoppelt und mit dem Modul Entwässerer versehen ist.

Der Entwässerer kann ferner vorteilhaft mit einem eigenen Gehäuse gestaltet sein, welches an ein Gehäuse des Filterelements ankoppelbar ist. Die Kopplung kann beispielsweise durch einen Rast- oder Schraubverschluss erfolgen, an dem eine entsprechend gestaltete Abdichtung vorgesehen ist. Alternativ kann der erfindungsgemäß als Modul gestaltete Entwässerer durch eine Leitung, wie beispielsweise ein Rohr oder einen Schlauch mit dem zugehörigen Filterelement verbunden sein. Mit einer solchen Lösung kann der Kraftstofffilter auf zwei Abschnitte im Bauraum eines zugehörigen Kraftfahrzeugs verteilt werden, in denen bisher einzeln nicht ausreichend Platz für einen Kraftstofffilter gewesen wäre.
Die erfindungsgemäße Aufgabe ist ferner besonders vorteilhaft mit einem gattungsgemäßen Kraftstofffilter gelöst, bei dem eine das Wasser abscheidende durchlässige semipermeable Membran vorgesehen ist, welche auf einem Träger flächig aufliegt. Eine derart scheibenförmig ausgelegte Membran kann im Vergleich zu bekannten Membranen besonders dünn und aus einem Material gestaltet sein, welches allein nicht die erforderliche Stabilität aufweisen würde, welches aber für das gewünschte Abscheiden von Wasser besonders vorteilhafte Eigenschaften aufweist. Zu diesen Eigenschaften gehört unter anderem auch eine hydrophile Oberfläche des Materials. Neben der genannten mechanischen Stabilisierung der wasserabscheidenden Membran dient der oben erwähnte Träger bei einem Unfall ferner als Crash-Schutz.

Darüber hinaus ist erfindungsgemäß die Aufgabe ferner mit einem gattungsgemäßen Kraftstofffilter gelöst, bei dem der Entwässerer mit einem porösen Element zum Verdunsten des abgeführten Wassers versehen ist. Bei einem derartigen erfindungsgemäßen Entwässerer wird das abgeführte Wasser insbesondere nicht durch ein Absperrorgan abgelassen oder zu einem zweiten Entwässerer gefördert, sondern es wird unmittelbar zu einem porösen Element geführt, an dem es verdunstet und auf diese Weise aus dem Entwässerer entfernt wird. Somit kann eine hinsichtlich der Herstellungs- und Betriebskosten besonders vorteilhafte "automatische" Entwässerung geschaffen werden. Das poröse Element ist vorteilhaft vergleichsweise großflächig, z.B. in Form einer Scheibe die eine vergleichsweise hohe Stabilität aufweist und, wie oben bereits angedeutet, als Crash-Schutz dienen kann.

Das vorgesehene poröse Element zum Verdunsten des abgeschiedenen Wassers ist derart gestaltet, dass die durchlässige semipermeable Membran darauf unmittelbar aufliegt und das Element somit einen Träger bildet, welcher die Membran stützt, mechanisch stabilisiert und als Crash-Schutz dient. Ein derartiges poröses Element erfüllt also eine Mehrfachfunktion.
Der Entwässerer des erfindungsgemäßen Kraftstofffilters ist bevorzugt mit einem Gehäuse gestaltet, welches im Bereich des porösen Elements nach außen offen ist. Der offene Bereich ermöglicht eine unmittelbare Luftzirkulation am porösen Element, welche insbesondere wegen der in einem Motorraum eines Kraftfahrzeugs vorherrschenden vergleichsweise hohen Temperatur und (besonders während der Fahrt) starken Luftbewegung, ein Verdunsten des Wassers am porösen Element vorteilhaft beeinflusst. Der nach außen offene Abschnitt des Entwässerers sollte vorteilhaft in Einbaulage von diesem sich an dessen Unterseite befinden. Ein Ablagern von Schmutz oder Verunreinigungen an der Außenseite des porösen Elements ist damit weitgehend verhindert und die Gesamtkonstruktion führt ferner in vorteilhafter Weise dazu, dass zu verdunstendes Wasser sich über der Membran und dem darunterliegenden porösen Element sammelt, bevor es durch dieses verdunstet wird.
Damit ein Austreten von Kraftstoff am erfindungsgemäßen Kraftstofffilter durch die Membran oder das poröse Element hindurch dauerhaft verhindert ist, sollte das poröse Element in einem Unfall-geschützten Halter angeordnet sein. Ein solcher Halter kann besonders vorteilhaft mit einem Entwässerer gestaltet sein, der als eigenständiges Modul ausgebildet ist. So kann das Modul bzw. der Entwässerer beispielsweise mit einem entsprechend stabil gestalteten Außengehäuse versehen sein, welches an ein Gehäuse des Filterelements derart angekoppelt ist, dass es bei einem Unfall zwar zu einer (geringfügigen) Verformung der einzelnen Komponenten kommen kann, nicht aber zu einem Bärsten des in dem Gehäuse angeordneten porösen Elements.

Die Gefahr eines Austretens von Kraftstoff an dem erfindungsgemäßen Kraftstofffilter wird dadurch verringert, dass der Entwässerer mit zwei für Wasser durchlässigen semipermeablen und hydrophilen Membranen gestaltet ist. Das abzuscheidende Wasser tritt dann zunächst durch eine der hydrophilen Membranen durch und gelangt in einen Zwischenraum zwischen den beiden hydrophilen Membranen, aus dem es nur durch die zweite hydrophile Membran hindurch nach außen gelangen kann. Kommt es bei einem Unfall zu einem Bärsten von einer der beiden hydrophilen Membranen, so ist das Gesamtsystem derart redundant gestaltet, dass die zweite hydrophile Membran ein Austreten von Kraftstoff sicher verhindert.
Um die Sicherheit des Gesamtsystems weiter zu erhöhen, kann vorteilhaft ein Sensor zum Erkennen von Kraftstoffrückständen in dem zwischen den beiden Membranen gebildeten Raum vorgesehen sein. Der Sensor erkennt, wenn es an der ersten vom Wasser zu durchdringenden hydrophilen Membran zu einer Störung kommt und dadurch Kraftstoffpartikel in den Zwischenraum gelangen konnten. Sollte eine solche Störung festgestellt werden, so kann diese beispielsweise durch einen einfachen Austausch des erfindungsgemäß als eigenständiges Modul gestalteten Entwässerers behoben werden. Ein Austauschen des zugehörigen Filterelements ist bei einer derartigen Reparatur nicht erforderlich.
Insbesondere bei Kraftfahrzeugen werden stetig steigende Anforderungen in Bezug auf einen möglichst kleinen Bauraum von Komponenten des Fahrzeugs gestellt. Um diesen Anforderungen gerecht zu werden ist ein gattungsgemäßer Kraftstofffilter in vorteilhafter Weise derart gestaltet, dass dessen Filterelement im Wesentlichen hohlzylindrisch gestaltet und dessen Entwässerer zumindest abschnittsweise im Inneren des Hohlzylinders angeordnet ist.
Eine derartige Anordnung eines Filterelements an einem Kraftstofffilter kann besonders vorteilhaft in Kombination mit einem Entwässerer genutzt werden, der an der Reinseite des Filterelements angeordnet ist. Bei einer Anordnung an der Reinseite des Filterelements ist eine Verschmutzung der Membran des Entwässerers durch Partikel aus dem Kraftstoff weitgehend verhindert, weil solche Partikel bereits beim Durchströmen des Kraftstoffs durch das Filterelement herausgefiltert worden sind.
Nachfolgend werden Ausführungsbeispiele eines erfindungsgemäßen Kraftstofffilters mit einem Filterelement und einem Entwässerer anhand der beigefügten schematischen Zeichnungen näher erläutert. Es zeigt:
Fig. 1 einen Längsschnitt eines Beispiels eines Kraftstofffilters.
Fig. 2 eine perspektivische Seitenansicht von oben eines Entwässerers des Kraftstofffilters gemäß Fig. 1,
Fig. 3 eine perspektivische Seitenansicht von unten des Entwässerers gemäß Fig. 2,
Fig. 4 einen stark schematischen Längsschnitt eines zweiten Ausführungsbeispiels eines erfindungsgemäßen Entwässerers eines Kraftstofffilters und
Fig. 5 einen stark vereinfachten Längsschnitt eines zweiten Ausführungsbeispiels eines erfindungsgemäßen Kraftstofffilters mit einem Filterelement und einem Entwässerer. In den Fig. 1 bis 3 ist ein Kraftstofffilter 10 veranschaulicht, welcher aus einem Filterelement 12 und einem Entwässerer 14 zusammengesetzt ist. Der Entwässerer 14 ist dabei als ein eigenständiges Modul gestaltet, welches, wie nachfolgend näher erläutert werden wird, im Reparatur- oder Wartungsfall vom Filterelement 12 getrennt und einzeln ausgetauscht werden kann.

Das Filterelement 12 ist im Wesentlichen hohlzylindrisch gestaltet und in einem im Wesentlichen zylindrischen Filtergehäuse 16 angeordnet. Das Filterelement 12 liegt dabei an einer Deckenfläche 18 des Filtergehäuses 16 mit einer seiner Stirnseiten an und ist an seiner gegenüberliegenden Bodenfläche 20 derart verschlossen, dass dort kein Kraftstoff ein- oder ausströmen kann.

An der Mantelfläche 22 des im Wesentlichen zylindrischen Filtergehäuses 16 ist ein Kraftstoffeinlass 24 ausgebildet, durch den verunreinigter Kraftstoff 26 zugeführt werden kann. Der derart in das Filtergehäuse 16 eingeführte Kraftstoff trifft auf eine Mantelfläche 26 des Filterelements 12 und es werden dort nicht näher veranschaulichte Schmutzpartikel und Wasserpartikel 30 derart aus dem verunreinigten Kraftstoff 26 abgeschieden, dass allein gereinigter Kraftstoff 32 in einen Innenraum 34 des im Wesentlichen hohlzylindrischen Filterelements 12 gelangt. Der gereinigte Kraftstoff 32 strömt dann durch einen an der Deckenfläche 18 des Filtergehäuses 16 angeordneten Kraftstoffauslaß 36 aus dem Kraftstofffilter 10 heraus zu einer weiter nicht dargestellten Brennkraftmaschine.

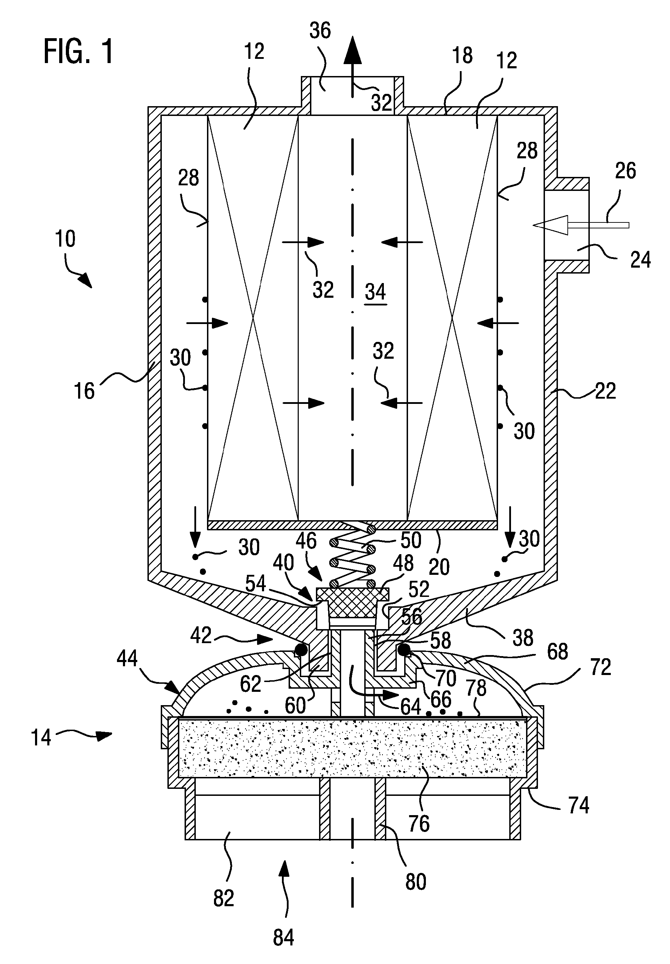

Die abgeschiedenen bzw. abgetrennten Wasserpartikel 30 sinken im Inneren des zylindrischen Filtergehäuses 16 ab und gelangen zu dessen Boden 38. Dort ist ein Wasserauslaß 40 ausgebildet, an dem sich ein Koppelmechanismus 42 für ein Entwässerergehäuse 44 befindet. Der Wasserauslaß 40 ist wahlweise mit einem Ventil 46 verschließbar, dessen Ventilteller 48 mittels einer Ventilfeder 50 an der Bodenfläche 20 des Filterelements 12 abgestützt und innerhalb einer Tellerführung 52 in Richtung zu einem den Wasserauslaß 40 umgebenden Ventilsitz 54 gedrängt ist. Der Ventilteller 48 ist in der in Fig. 1 dargestellten Anordnung, bei der das Entwässerergehäuse 44 an das Filtergehäuse 16 angekoppelt ist, mit Hilfe eines Dorns 56 vom Ventilsitz 54 abgehoben und dadurch das Ventil 46 in einem geöffneten Zustand gehalten.

Der Dorn 56 ist mit einem Außengewinde 58 versehen, welches in eine Hülse 60 mit Innengewinde 62 eingeschraubt ist. Die Hülse 60 ist am Boden 38 des Filtergehäuses 16 um den Wasserauslaß 40 herum ausgebildet. Durch sie hindurch ist bei geöffnetem Ventil 46 ein Strömungsweg 64 aus dem Filtergehäuse 16 heraus in das Entwässerergehäuse 44 gebildet. Um diesen Strömungsweg 46 an der Koppelstelle zwischen dem Filtergehäuse 16 und dem Entwässerergehäuse 44 nach außen abzudichten, ist eine Vertiefung 66 in einer Deckenfläche 68 des Entwässerergehäuses 44 vorgesehen, in die die Hülse 60 hineinragt und an deren äußeren Rand sich ein Dichtring 70 befindet. Der derart angeordnete Dichtring 70 dichtet zwischen der Deckenfläche 68 und der Außenseite der Hülse 60 ab.

Das Entwässerergehäuse 44 ist mit einem im Wesentlichen haubenförmigen Oberteil 72 und einem im Wesentlichen ringförmigen Unterteil 74 gebildet, die miteinander durch eine Umspritzung verbunden sind. Zwischen dem Oberteil 72 und dem Unterteil 74 ist ein scheibenförmiges poröses Element 76 angeordnet, welches als Träger für eine semipermeable hydrophile Membran 78 aus einem organischen und/oder anorganischen Material, wie z.B. Cellulose dient. Die semipermeable hydrophile Membran 78 ist allein für Wasser durchlässig, während Kraftstoff- bzw. Kohlenwasserstoffpartikel an ihr zurückgehalten werden.

Das scheibenförmige poröse Element 76 ist beispielsweise aus Sintermetall, wie z.B. γ-Al₂O₃-Keramik hergestellt und ist zusammen mit der darauf angebrachten semipermeablen hydrophilen Membran 78 an seiner Oberseite durch den in der Deckenfläche 68 des Entwässerergehäuses 44 ausgebildeten Dorn 56 gehalten und an seiner Unterseite mit Hilfe einer Stützhülse 80 abgestützt, die mit Hilfe von insgesamt sechs sich im Wesentlichen radial erstreckenden Stegen 82 im Zentrum des Unterteils 74 gehalten ist. Mit der derartigen Abstützung der semipermeablen hydrophilen Membran 78 über das scheibenförmige poröse Element 76 und die Stützhülse 80 ist die semipermeable hydrophile Membran 78 dauerhaft mechanisch stabil gehaltert und ein guter Crash-Schutz gewährleistet.

Zwischen den Stegen 82 ist ferner ein nach außen offener Bereich 84 gebildet, durch den jenes Wasser verdunsten kann, welches durch die semipermeable hydrophile Membran 78 hindurch getreten und vom scheibenförmigen porösen Element 76 von dieser weg nach außen transportiert worden ist.

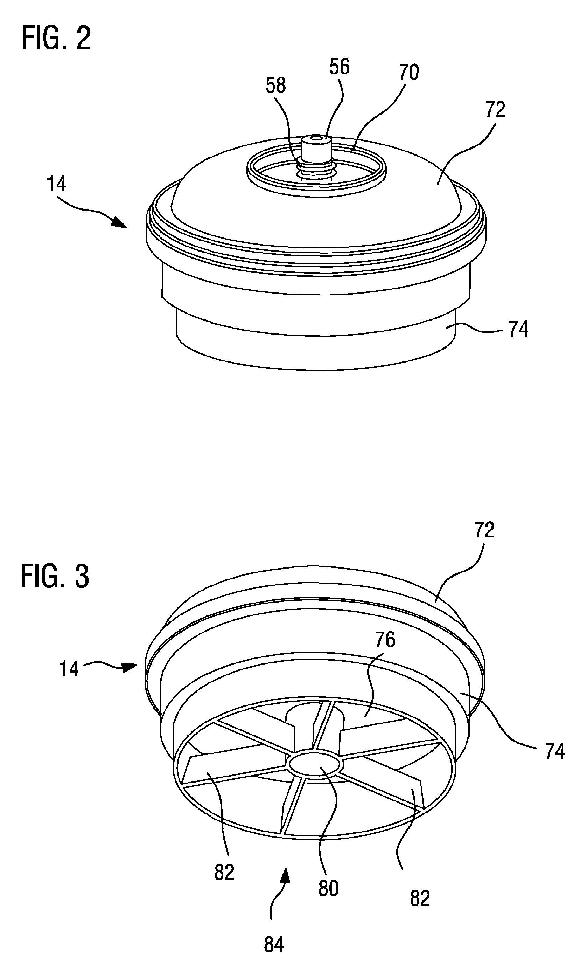

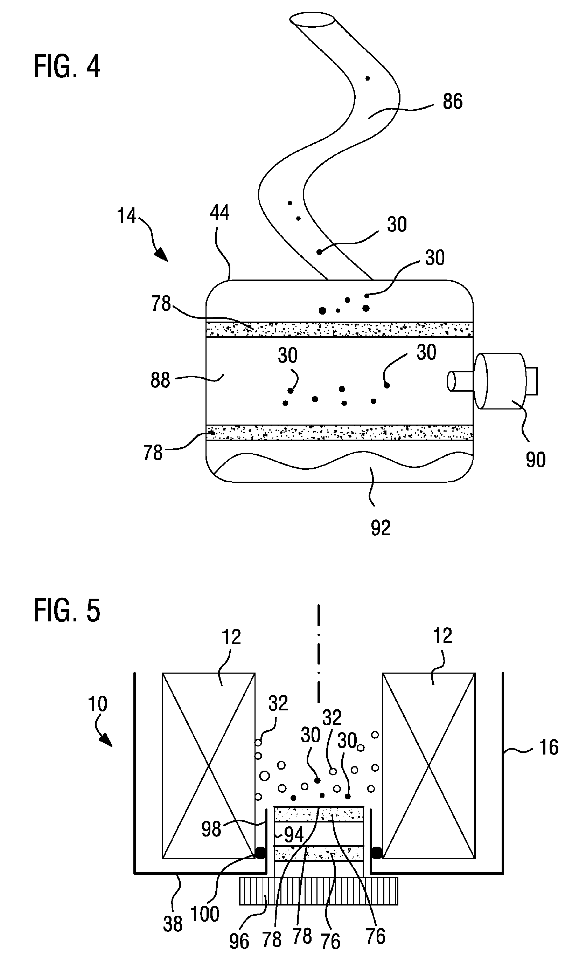

In Fig. 4 ist ein Ausführungsbeispiel eines Entwässerers 14 veranschaulicht, der ebenfalls mit einem eigenständigen Entwässerergehäuse 44 gestaltet ist. Das Entwässerergehäuse 44 ist jedoch nicht wie bei dem Ausführungsbeispiel gemäß Fig. 1 bis 3 durch einen Koppelmechanismus unmittelbar an ein Filtergehäuse angekoppelt, sondern es ist ein Schlauch 86 vorgesehen, durch den eine Leitungsverbindung für abgeschiedenes Wasser von einem (nicht dargestellten) Filterelement hin zum Entwässerer 14 geschaffen ist. Im Inneren des Entwässerergehäuses 44 gemäß Fig. 4 sind insgesamt zwei semipermeable hydrophile Membranen 78 vorgesehen, welche im Wesentlichen quer zur Strömungsrichtung von durch den Schlauch 86 zugeführtem Wasser ausgerichtet sind. Die semipermeablen hydrophilen Membrane 78 begrenzen dabei einen Zwischenraum 88 in dem Entwässerergehäuse 44, in den hinein Wasser nur durch die obere der beiden semipermeablen hydrophilen Membrane 78 eintreten kann.

In den Zwischenraum 88 ragt ein Detektor bzw. Sensor 90 zum Erkennen von Kraftstoffbzw. Kohlenwasserstoffrückständen hinein. Der derart angeordnete Sensor 90 spricht an, wenn in den Zwischenraum 88 nicht allein abgeschiedenes Wasser gelangt ist, sondern wenn sich dort auch Kraftstoffpartikel befinden. Er zeigt damit eine Fehlfunktion der oberen der beiden semipermeablen hydrophilen Membranen 78 an und ermöglicht, dass entsprechend reagiert wird. So könnte beispielsweise die obere der beiden semipermeablen hydrophilen Membranen 78 gebrochen sein, woraufhin der Entwässerer 14 entsprechend repariert oder ausgetauscht werden müsste. Bei einem solchen Schadensfall ist durch die untere der beiden semipermeablen hydrophilen Membranen 78 sichergestellt, dass es nicht zu einem unerwünschten Austreten von Kraftstoff am Entwässerer 14 gemäß Fig. 4 kommen kann.

Im Übrigen befindet sich unter der unteren der beiden semipermeablen hydrophilen Membranen 78 eine nicht näher veranschaulichte Abführeinrichtung 92 für das abgeschiedene Wasser, welche ähnlich wie die in Fig. 1 dargestellte Wasserabführung gestaltet sein kann.

In Fig. 5 ist ein Ausführungsbeispiel eines Kraftstofffilters 10 dargestellt, bei dem ähnlich wie bei dem Ausführungsbeispiel gemäß Fig. 1 bis 3, das Filterelement 12 und der Entwässerer 14 als getrennte Module gestaltet sind. Bei dem Ausführungsbeispiel gemäß Fig. 5 befindet sich der Entwässerer 14 jedoch nicht unterhalb des Filterelements 12 sondern ist in dessen Innenraum 34 integriert und befindet sich dort an der Reinseite des Filterelements 12.

Der Entwässerer 14 gemäß Fig. 5 ist, ähnlich zum Ausführungsbeispiel gemäß Fig. 4 mit zwei semipermeablen hydrophilen Membranen 78 gestaltet. Die Membranen 78 sind zueinander im Wesentlichen parallel in einer hohlzylindrischen Patrone 94 angeordnet, an deren Unterseite sich eine Abführeinrichtung 96 für abgeschiedenes Wasser befindet. Die semipermeablen hydrophilen Membranen 78 sind dabei wiederum jeweils einzeln von einem scheibenförmigen porösen Element 76 gestützt und die Abführeinrichtung 96 ist als ein nach außen offener Abschnitt bzw. Bereich gestaltet, der mit einem feinmaschigen Gitter versehen ist.

Die Patrone 94 ist in einen Hülsenabschnitt 98 hingeschraubt, welcher am Boden 38 des Filtergehäuses 16 ausgebildet ist. Die Patrone 94 ist dabei flüssigkeitsdicht mit dem Hülsenabschnitt 98 verbunden. An der zum Inneren des Filtergehäuses 16 gewandten Seite des Hülsenabschnitts 98 ist ein Dichtring 100 angeordnet an den das Filterelement 12 angrenzt, so dass an diesem Reinseite und Schmutzseite voneinander getrennt sind.

### Bezugszeichenliste

- 10: Kraftstofffilter
- 12: Filterelement
- 14: Entwässerer
- 16: Filtergehäuse
- 18: Deckenfläche des Filtergehäuses
- 20: Bodenfläche des Filterelements
- 22: Mantelfläche des Filtergehäuses
- 24: Kraftstoffeinlaß
- 26: verunreinigter Kraftstoff
- 28: Mantelfläche des Filterelements
- 30: Wasserpartikel
- 32: gereinigter Kraftstoff
- 34: Innenraum bzw. Reinseite des Filterelements
- 36: Kraftstoffauslaß
- 38: Boden des Filtergehäuses
- 40: Wasserauslaß
- 42: Koppelmechanismus
- 44: Entwässerergehäuse
- 46: Ventil
- 48: Ventilteller
- 50: Ventilfeder
- 52: Tellerführung
- 54: Ventilsitz
- 56: Dorn
- 58: Außengewinde
- 60: Hülse
- 62: Innengewinde
- 64: Strömungsweg
- 66: Vertiefung
- 68: Deckenfläche des Entwässerergehäuses
- 70: Dichtring
- 72: Oberteil
- 74: Unterteil
- 76: scheibenförmiges poröses Element
- 78: semipermeable hydrophile Membran
- 80: Stützhülse
- 82: Steg
- 84: nach außen offener Bereich
- 86: Schlauch
- 88: Zwischenraum
- 90: Sensor
- 92: Abführeinrichtung
- 94: Patrone
- 96: Abführeinrichtung
- 98: Hülsenabschnitt
- 100: Dichtring

## Patentansprüche

1. Kraftstofffilter mit einem Filterelement (12) zum Herausfiltern von Partikeln und Wasser aus einem durch den Kraftstofffilter (10) strömendem Kraftstoff, und einem Entwässerer (14) zum Abscheiden des herausgefilterten Wassers aus dem Kraftstofffilter (10), und bei dem der Entwässerer (14) mit einer für Wasser durchlässigen semipermeablen Membran (78) gestaltet ist,
die Membran (78) auf einem Träger (76) flächig aufliegt, der zugleich ein poröses Element zum Verdunsten des abgeschiedenen Wassers bildet,
**dadurch gekennzeichnet, dass**
der Entwässerer (14) mit zwei für Wasser durchlässigen semipermeablen und hydrophilen Membranen (78) gestaltet ist, wobei die zwei semipermeablen, hydrophilen Membranen einen Zwischenraum (88) in einem Gehäuse (44) des Entwässerers begrenzen.

2. Kraftstofffilter nach Anspruch 1,
**dadurch gekennzeichnet, dass** der Entwässerer (14) als eine eigenständige Baueinheit gestaltet ist, welche wahlweise von dem Filterelement (12) getrennt werden kann.

3. Kraftstofffilter nach Anspruch 1 oder 2,
**dadurch gekennzeichnet, dass** der Entwässerer (14) mit einem eigenen Gehäuse (44) gestaltet ist, welches an ein Gehäuse (16) des Filterelements (12) ankoppelbar ist.

4. Kraftstofffilter nach einem der Ansprüche 1 bis 3,
**dadurch gekennzeichnet, dass** der Entwässerer (14) mit einem Gehäuse (44) gestaltet ist, welches im Bereich des porösen Elements (76) nach außen offen ist (84).

5. Kraftstofffilter nach Anspruch 4,
**dadurch gekennzeichnet, dass** der nach außen offene Bereich (84) sich in Einbaulage des Entwässerers (14) an dessen Unterseite befindet.

6. Kraftstofffilter nach einem der Ansprüche 1 bis 5,
**dadurch gekennzeichnet, dass** das poröse Element an einem Unfall-geschütztem Halter (80) angeordnet ist.

7. Kraftstofffilter nach einem der Ansprüche 1 bis 6,
**dadurch gekennzeichnet, dass** ein Sensor (90) zum Erkennen von Kraftstoffrückständen in dem zwischen den beiden Membranen (78) gebildeten Raum (88) vorgesehen ist.

8. Kraftstofffilter nach einem der Ansprüche 1 bis 7,
**dadurch gekennzeichnet, dass** das Filterelement (12) im Wesentlichen hohlzylindrisch gestaltet und der Entwässerer (14) zumindest abschnittsweise im Inneren (34) des Hohlzylinders angeordnet ist.

9. Kraftstofffilter nach einem der Ansprüche 1 bis 8,
**dadurch gekennzeichnet, dass** der Entwässerer (14) an der Reinseite (34) des Filterelements (12) angeordnet ist.

## Claims

1. Fuel filter having a filter element (12) for filtering particles and water out of a fuel flowing through the fuel filter (10), and having a dewatering means (14) for discharging the filtered-out water out of the fuel filter (10), and wherein the dewatering means (14) is formed with a semipermeable membrane (78) which is permeable to water,
the membrane (78) lying areally on a support (76) which simultaneously forms a porous element for the evaporation of the discharged water, **characterized in that**
the dewatering means (14) is formed with two semipermeable and hydrophilic membranes (78) which are permeable to water,
wherein the two semipermeable, hydrophilic membranes delimit an intermediate space (88) in a housing (44) of the dewatering means.

2. Fuel filter according to Claim 1,
**characterized in that** the dewatering means (14) is configured as an independent structural unit, which can be selectively separated from the filter element (12).

3. Fuel filter according to Claim 1 or 2,
**characterized in that** the dewatering means (14) is formed with a dedicated housing (44) which can be coupled to a housing (16) of the filter element (12).

4. Fuel filter according to one of Claims 1 to 3,
**characterized in that** the dewatering means (14) is formed with a housing (44) which is open to the outside (84) in the region of the porous element (76).

5. Fuel filter according to Claim 4,
**characterized in that** the outwardly open region (84) is, in the installed position of the dewatering means (14), situated on the underside thereof.

6. Fuel filter according to one of Claims 1 to 5,
**characterized in that** the porous element is arranged on an accident-protected holder (80).

7. Fuel filter according to one of Claims 1 to 6,
**characterized in that** a sensor (90) for detecting fuel residues in the space (88) formed between the two membranes (78) is provided.

8. Fuel filter according to one of Claims 1 to 7,
**characterized in that** the filter element (12) is of substantially hollow cylindrical form, and the dewatering means (14) is, at least in sections, arranged in the interior (34) of the hollow cylinder.

9. Fuel filter according to one of Claims 1 to 8,
**characterized in that** the dewatering means (14) is arranged on the clean side (34) of the filter element (12).

## Revendications

1. Filtre à carburant comprenant un élément de filtre (12) pour éliminer par filtration les particules et l'eau d'un carburant s'écoulant à travers le filtre à carburant (10), et un purgeur (14) pour séparer l'eau éliminée par filtration hors du filtre à carburant (10), et dans lequel le purgeur (14) est configuré avec une membrane (78) semiperméable perméable à l'eau,
la membrane (78) reposant à plat sur un support (76) qui forme en même temps un élément poreux pour l'évaporation de l'eau séparée,
**caractérisé en ce que** le purgeur (14) est configuré avec deux membranes (78) semi-perméables et hydrophiles perméables à l'eau, les deux membranes semi-perméables hydrophiles délimitant un espace intermédiaire (88) dans un boîtier (44) du purgeur.

2. Filtre à carburant selon la revendication 1,
**caractérisé en ce que** le purgeur (14) est configuré sous forme d'une unité structurelle autonome qui peut être au choix séparée de l'élément de filtre (12).

3. Filtre à carburant selon la revendication 1 ou 2,
**caractérisé en ce que** le purgeur (14) est configuré avec son propre boîtier (44) qui peut être raccordé à un boîtier (16) de l'élément de filtre (12).

4. Filtre à carburant selon l'une quelconque des revendications 1 à 3,
**caractérisé en ce que** le purgeur (14) est configuré avec un boîtier (44) qui est ouvert vers l'extérieur (84) dans la région de l'élément poreux (76).

5. Filtre à carburant selon la revendication 4,
**caractérisé en ce que** la région ouverte vers l'extérieur (84) se trouve, dans la position d'installation du purgeur (14), au niveau de son côté inférieur.

6. Filtre à carburant selon l'une quelconque des revendications 1 à 5,
**caractérisé en ce que** l'élément poreux est disposé au niveau d'un support protégé contre les accidents (80).

7. Filtre à carburant selon l'une quelconque des revendications 1 à 6,
**caractérisé en ce qu'**un capteur (90) est prévu pour détecter des résidus de carburant dans l'espace (88) formé entre les deux membranes (78).

8. Filtre à carburant selon l'une quelconque des revendications 1 à 7,
**caractérisé en ce que** l'élément de filtre (12) est configuré de manière essentiellement cylindrique creuse et le purgeur (14) est disposé au moins en partie à l'intérieur (34) du cylindre creux.

9. Filtre à carburant selon l'une quelconque des revendications 1 à 8,
**caractérisé en ce que** le purgeur (14) est disposé au niveau du côté propre (34) de l'élément de filtre (12).
